# EUROPEAN PATENT APPLICATION

(11) **EP 2 557 610 A1**
(43) Date of publication of application: **13.02.2013**
(21) Application number: 11765712.2
(22) Date of filing: 31.03.2011
(51) Int. Cl.: H01M 2/10, H01M 2/20, H01M 2/30

(54) **CELL MODULE**

(30) Priority: 07.04.2010 JP 2010088831
(71) Applicant: Nissan Motor Co., Ltd, Yokohama-shi, Kanagawa 221-0023 (JP)
(72) Inventor: MOTOHASHI, Toshiyuki, Kanagawa 243-0123 (JP); HIGASHINO, Tatsuya, Kanagawa 243-0123 (JP); SUZUKI, Yasuhiro, Kanagawa 243-0123 (JP)
(74) Representative: Grünecker, Kinkeldey, Stockmair & Schwanhäusser
(86) International application number: PCT/JP2011/058168
(87) International publication number: WO 2011/125812

(57) **Abstract**

Disclosed is a cell module formed by laminating a plurality of flat cells, each of which has electrode tabs, and a plurality of insulating members, which are disposed so as to eliminate a short circuit between the electrode tabs. The cell module has: a fitting portion 70 formed by lamination of the insulating members so as to be fitted with an external connector 80; and a second engaging portion formed in the insulating members 100 so as to be engaged with a first engaging portion of the external connector 80. It is possible to provide the cell module with a reduced number of component parts such that the connector can be inserted and engaged with the cell module.

## Description

### Field of the Invention

The present invention relates to a cell module.

### Background Art

An assembled cell module in which a plurality of flat thin cells are connected in series or parallel has an insertion hole in which a connector connected to a controller is inserted in order to detect a voltage of each of the flat thin cells (see Patent Document 1).

In conventional cell configurations, it is common practice to provide an insulating cover as a separate component part with an insertion hole for insertion of a voltage detection connector and attach the insulating cover to the laminated assembly of flat cells. This leads to much manufacturing time and effort due to an increased number of component parts.

### Prior Art Documents

### Patent Document

Patent Document 1: Japanese Laid-Open Patent Publication No. 2006-210312

### Summary of the Invention

It is accordingly an object of the present invention to provide a cell module with a reduced number of component parts such that a connector can be inserted and fitted with the cell module.

According to the present invention, there is provided a cell module, comprising: a plurality of flat cells and insulating members laminated together, the flat cells having electrode tabs, the insulating members being arranged so as to prevent a short circuit between the electrode tabs; a fitting portion formed by lamination of the insulating members so as to be fitted with an external connector; and a second engaging portion formed in the insulating members so as to be engaged with a first engaging portion of the external connector.

In the present invention, the fitting portion is formed by lamination of the insulating members and fitted with the external connector; and the second engaging portion is formed in the insulating members and engaged with the external connector. It is therefore possible to connect the cell module with the external connector while reducing the number of component parts of the cell module.

### Brief Description of Drawings

FIG. 1 is a plan view of a flat cell incorporated in a cell module according to one exemplary embodiment of the present invention.
FIG. 2 is a cross-sectional view of the flat cell taken along line A-A of FIG. 1.
FIG. 3 is a perspective view of a terminal plate of the cell module according to one exemplary embodiment of the present invention.
FIG. 4 is a perspective view of an integral cell unit of the cell module according to one exemplary embodiment of the present invention.
FIG. 5 is an enlarged view of part of the integral cell unit shown in area B of FIG. 4.
FIG. 6 is a perspective view of part of another integral cell unit corresponding to that shown in area B of FIG. 4.
FIG. 7 is a perspective view of a laminated cell assembly of the cell module according to one exemplary embodiment of the present invention.
FIG. 8 is an enlarged view of part of the laminated cell assembly shown in area C of FIG. 7.
FIG. 9 is a perspective view of part of the laminated cell assembly of FIG. 7 and an external connector.
FIG. 10 is a perspective view showing a state in which the external connector is fitted in the laminated cell assembly.
FIG. 11 is a cross-sectional view of part of taken along line D-D of FIG. 9.
FIG. 12 is a cross-sectional view of part taken along line E-E of FIG. 10.
FIG. 13 is a perspective view of the cell module before being sealed in a casing.
FIG. 14 is a perspective view of the cell module after being sealed in the casing.

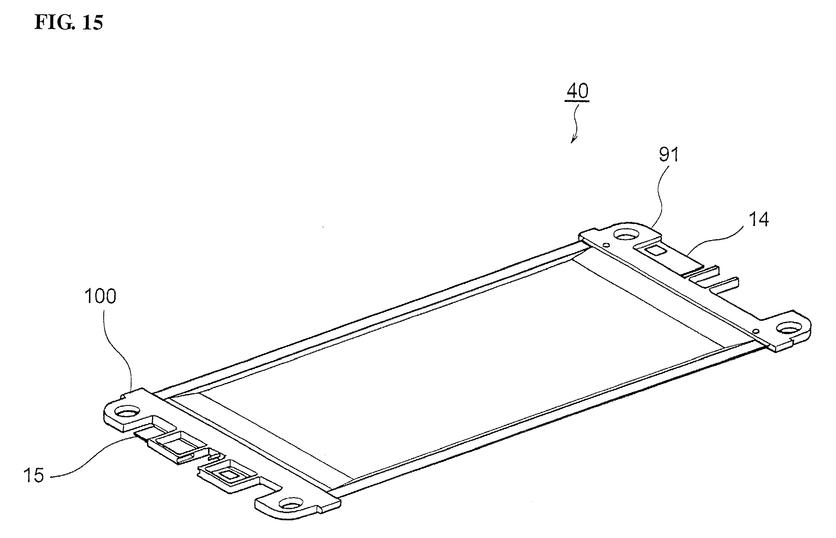

FIG. 15 is a perspective view of a modified integral cell unit of the cell module according to one exemplary embodiment of the present invention.

### Description of Embodiments

Hereinafter, exemplary embodiments of the present invention will be described below with reference to the drawings.

### [First Embodiment]

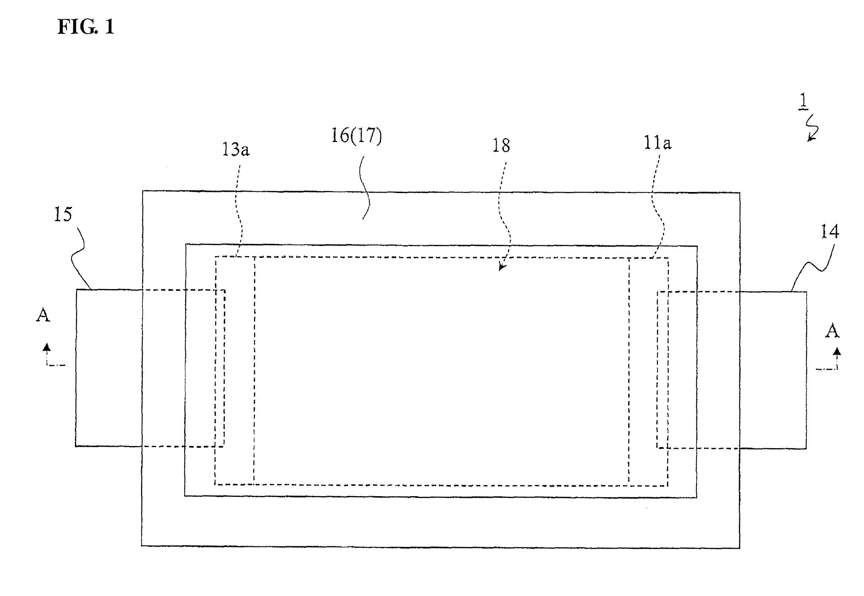

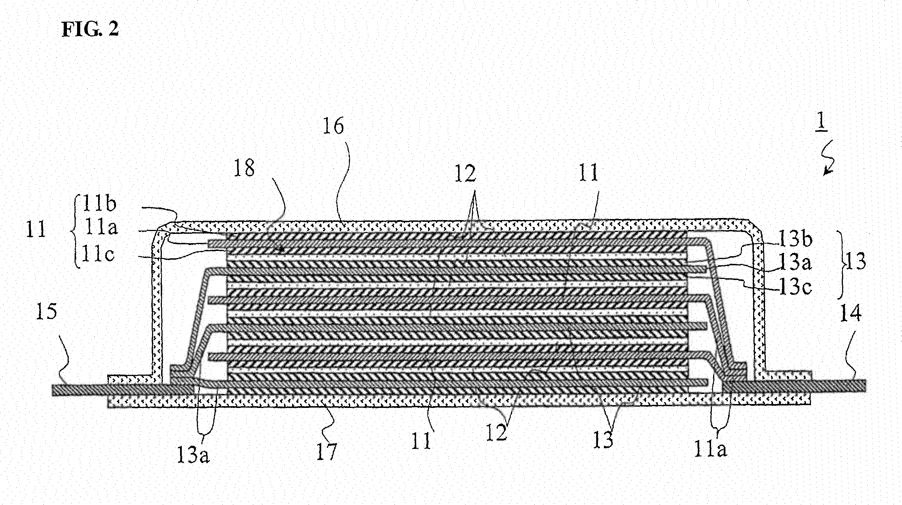

Flat cell 1 for use in a cell module according to the present embodiment will be first explained below with reference to FIGS. 1 and 2. FIG. 1 is a plan view of flat cell 1. FIG. 2 is a cross-sectional view of flat cell 1 taken along line A-A of FIG. 1. In the present embodiment, flat cell 1 is designed as a plate-shaped laminate-type lithium-ion secondary cell (thin cell). As shown in FIGS. 1 and 2, flat cell 1 includes three positive electrode plates 11, five separators 12, three negative electrode plates 13, positive electrode tab 14 (positive electrode terminal), negative electrode tab 15 (negative electrode terminal), upper package member 16, lower package member 17 and an electrolyte material although the electrolyte material is not specifically illustrated.

Among these component parts, positive electrode plates 11, separators 12, negative electrode plates 13 and the electrolyte material constitute power generating element 18. Further, positive and negative electrode plates 11 and 13 serve as electrode plates; and upper and lower package members 16 and 17 serve as a pair of package members.

Each of positive electrode plates 11 of power generating element 18 has positive electrode collector 11a extending to positive electrode tab 14 and positive electrode layers 11b and 11c formed on parts of opposite main surfaces of positive electrode collector 11a. Herein, positive electrode layers 11b and 11c of positive electrode plates 11 are not formed over the entire main surfaces of positive electrode collectors 11a but are formed only on the parts of the main surfaces of positive electrode collectors 11a on which positive electrode plates 11 substantially overlap separators 12 at the time positive electrode plates 11, separators 12 and negative electrode plates 12 are laminated and assembled into power generating element 18 as shown in FIG. 2. Although positive electrode plate 11 and positive electrode collector 11a are formed from one conductive material sheet in the present embodiment, positive electrode collector 11a may be formed as a separate component part and joined to positive electrode plate 11.

Positive electrode collectors 11a of positive electrode plates 11 are formed of, for instance, electrochemically stable metal foil such as aluminum foil, aluminum alloy foil, copper foil or nickel foil. Positive electrode layers 11b and 11c of positive electrode plate 11 are formed by, for instance, mixing a positive electrode active material such as lithium composite oxide e.g. lithium nickelate (LiNiO₂), lithium manganate (LiMnO₂) or lithium cobaltate (LiCoO₂) or chalcogenide (compound of e.g. S, Se or Te), a conductive agent such as carbon black, a binder such as aqueous dispersion medium of polypolytetrafluoroethylene and a solvent, applying the resulting mixture composition to the parts of the main surfaces of positive electrode collectors 11a and subjecting the applied mixture composition to drying and rolling.

Each of negative electrode plates 13 of power generating element 18 has negative electrode collector 13a extending to negative electrode tab 15 and negative electrode layers 13b and 13c formed on parts of opposite main surfaces of negative electrode collector 13a. Herein, negative electrode layers 13b and 13c of negative electrode plates 13 are not formed over the entire main surfaces of negative electrode collectors 13a but are formed only on the parts of the main surfaces of negative electrode collectors 13a on which negative electrode plates 13 substantially overlap separators 12 at the time positive electrode plates 11, separators 12 and negative electrode plates 12 are laminated and assembled into power generating element 18 as shown in FIG. 2. Although negative electrode plate 13 and negative electrode collector 13a are formed from one conductive material sheet in the present embodiment, negative electrode collector 13a may be formed as a separate component part and joined to negative electrode plate 13.

Negative electrode collectors 13a of negative electrode plates 13 are formed of, for instance, electrochemically stable metal foil such as nickel foil, copper foil, stainless foil or iron foil. Negative electrode layers 13b and 13c of negative electrode plates 13 are formed by, for instance, mixing a negative electrode active material capable of absorbing and desorbing lithium ions of the positive electrode active material, such as amorphous carbon material, non-graphitizable carbon material, graphitizable carbon material or graphite, with an aqueous dispersion medium of styrene-butadiene rubber powder as a precursor to organic sintered body, drying and pulverizing the resulting mixture, mixing the thus-obtained main material in which carbonized stylene-butadiene rubber is supported on surfaces of carbon particles with a binder such as acrylic resin emulsion, applying the resulting mixture composition to the parts of the main surfaces of negative electrode collector 13a and subjecting the applied mixture composition to drying and rolling.

When amorphous or non-graphitizable carbon material is used as the negative electrode active material, the output voltage of the cell decreases with discharge amount due to lack of flat potential profile during charging/discharging. The use of such amorphous or non-graphitizable carbon material as the negative electrode active material is not suitable for applications to communication and business equipment, but is advantageous for applications to power sources of electric vehicles in view of the occurrence of no sudden output drops.

Separators 12 of power generating element 18 function to prevent a short circuit between positive and negative electrode plates 11 and 13 and may have the function of retaining the electrolyte material. Each of separators 12 is in the form of, for instance, a porous film of polyolefin such as polyethylene (PE) or polypropylene (PP) so as to close pores in the porous film by heat generation with the passage of overcurrent and thereby exhibit a current interrupt function.

In the present embodiment, separator 12 is not particularly limited to the single-layer polyolefin film. Separator 12 may alternatively have a three-layer structure in which a polypropylene film is sandwiched between polyethylene films or a laminated structure in which a porous polyolefin film is laminated to an organic nonwoven fabric etc.

In power generating element 18, positive electrode plates 11 and negative electrode plates 13 are alternately laminated to one another, with each of separators 12 being interposed between adjacent positive and negative electrode plates 11 and 13. Three positive electrode plates 11 are connected via respective positive electrode collectors 11 a to positive electrode tab 14 of metal foil, whereas three negative electrode plates 13 are connected via respective negative electrode collectors 13a to negative electrode tab 15 of metal foil.

The number of positive electrode plates 11, separators 12 and negative electrode plates 13 of power generating element 18 is not particularly limited to the above. For example, it is alternatively feasible to provide power generating element 18 with one positive electrode plate 11, three separators 12 and one negative electrode plate 13. The number of positive electrode plates 11, separators 12 and negative electrode plates 13 can be selected as needed.

There is no particular limitation on positive and negative electrode tabs 14 and 15 as long as each of positive and negative electrode tabs 14 and 15 is formed of an electrochemically stable metal material. Positive electrode tab 14 is formed of, for instance, aluminum foil, aluminum alloy foil, copper foil or nickel foil with a thickness of about 0.2 mm as in the case of positive electrode collectors 11a. Negative electrode tab 15 is formed of, for instance, nickel foil, copper foil, stainless foil or iron foil with a thickness of about 0.2 mm as in the case of negative electrode collectors 13a.

As already mentioned above, electrode plate 11, 13 is connected to electrode tab 14, 15 by extending metal foil collector 11a, 13a of electrode plate 11, 13 to electrode tab 14, 15, that is, forming electrode layers (positive electrode layers 11b and 11c or negative electrode layers 13b and 13c) on some part of metal foil sheet 11a, 13a and utilizing the remaining end part of metal foil sheet 11a, 13a as a joint to electrode tab 14, 15. Alternatively, collector 11a, 13a between positive electrode layers or between negative electrode layers and the joint to electrode tab 14, 15 may be formed of separate metal foil sheets and joined together by another material or component part.

Power generating element 18 is accommodated and sealed in upper and lower package members 16 and 17. Although not specifically illustrated in the drawings, each of upper and lower package members 16 and 17 has a three-layer structure including, in order from the inside to the outside of flat cell 1, an inner layer formed of a resin film having good electrolyte resistance and thermal adhesion properties, such as polyethylene, modified polyethylene, polypropylene, modified polypropylene or ionomer resin, an intermediate layer formed of metal foil such as aluminum foil and an outer layer formed of a resin film having good electrical insulating properties, such as polyamide resin or polyester resin.

In other words, each of upper and lower package members 16 and 17 is formed of a flexible material such as a resin-metal thin-film laminate material having a metal foil sheet such as aluminum foil, a film of polyethylene, modified polyethylene, polypropylene, modified polypropylene or ionomer resin laminated on one surface of the metal foil (the inner side of flat cell 1) and a film of polyamide resin or polyester resin laminated on the other surface of the metal foil (the outer side of flat cell 1).

Power generating element 18 and parts of positive and negative electrode tabs 14 and 15 are enclosed in package members 16 and 17. The inner space defined by package members 16 and 17 is sucked to vacuum while being filled with a liquid electrolyte solution of lithium salt such as lithium perchlorate, lithium fluoroborate or lithium hexafluorophosphate as a solute in an organic solvent. After that, outer peripheral edges of package members 16 and 17 are thermally fused to each other by heat pressing.

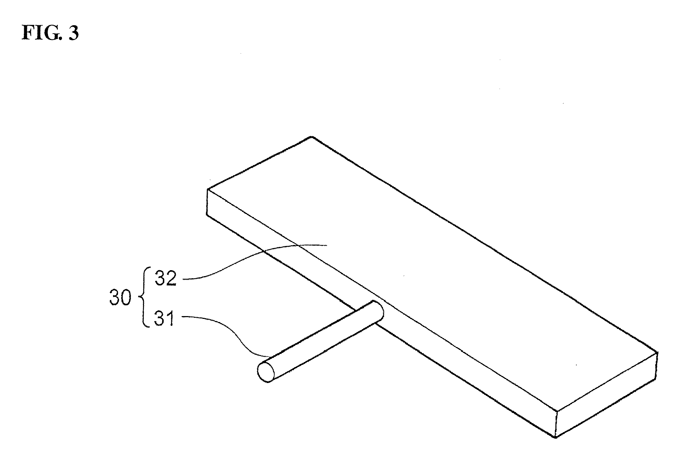

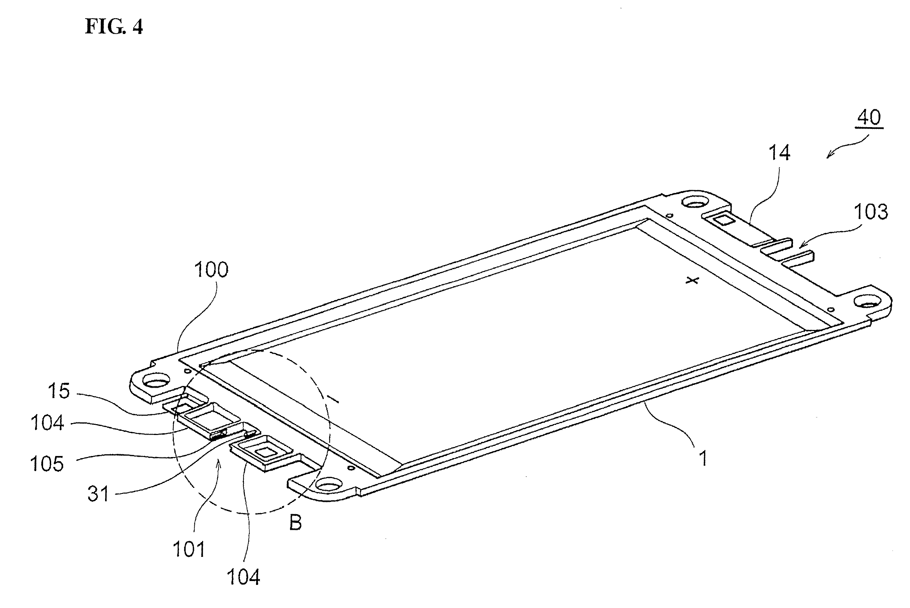

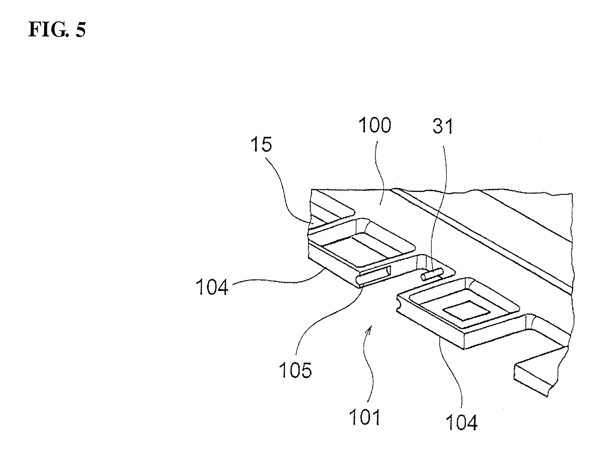

Spacer-integrated cell unit 40 (hereinafter referred to as "integral cell unit") incorporated in the cell module according to the present embodiment will be next explained below with reference to FIGS. 3 to 5. FIG. 3 is a perspective view of terminal plate 30. FIG. 4 is a perspective view of integral cell unit 40. FIG. 5 is an enlarged view of part of integral cell unit 40 shown in area B of FIG. 4.

Integral cell unit 40 includes flat cell 1, flame-shaped spacer 100 (as an insulating member) surrounding flat cell 1 and connector terminal 31. Spacer 100 is formed of an insulating resin material, a hot-melt material or a mixture thereof. Terminal plate 30 is provided with connector terminal 31 and body portion 32 and used as a detection terminal board for voltage detection of flat cell 1. Connector terminal 31 is part of terminal plate 30 and is formed integral with body portion 32 of terminal plate 30. Body portion 32 is plate-shaped, whereas connector terminal 31 is pin-shaped. Terminal plate 30 is formed of a conductive material such as aluminum, aluminum alloy, copper or nickel. Connector terminal 31 is not necessarily used as a voltage detection terminal and may alternatively be used as a power circuit terminal, i.e., input/output terminal of the cell module.

Part of body portion 32 is connected to electrode tab 15 (or electrode tab 14) so as to overlap part of electrode tab 15. For example, the parts of electrode tab 15 and body portion 30 are connected together by ultrasonic joining. By this, electrode tab 15 and connector terminal 31 are electrically connected to each other.

Both of electrode tab 15 and connector terminal 31 protrude to the outside of flat cell 1 in such a manner that a plane direction of plate-shaped electrode tab 15 is in parallel with a longitudinal direction of pin-shaped connector terminal 31 and a plane direction of body portion 30.

Spacer 100 is adapted to sandwich and hold therein terminal plate 30 and electrode tab 15 and is formed integral with electrode tab 15 and connector terminal 31. For example, it is feasible to form spacer 100 integral with electrode tab 15 and connector terminal 31 by insert molding, that is, placing flat cell 1 to which electrode tab 15 and terminal plate 30 have been connected in a flame-shaped mold, filling a resin material in the mold and curing the resin material. By this, spacer 100 and flat cell 1 are combined into one unit.

Cut 101 is formed at or around a center position in a short side of spacer 100. More specifically, cut 101 is formed by cutting out a center region of the short side of spacer 100 so as to extend in a concave shape from negative electrode-side end face 104 of spacer 100 toward the inside of flat cell 1. Connector terminal 31 is located in cut 101 so as to protrude outwardly within cut 101. Guide portion 105 is formed in side faces of cut 101, i.e., respective both lateral faces perpendicular to end face 104 of spacer 100.

Cut 103 is formed in a short side (positive electrode side) of spacer 101 opposite from the short side in which cut 101 is formed and is located at a position symmetrical with cut 101. More specifically, cut 103 is also formed by cutting out a center region of the short side of spacer 100 so as to extend in a concave shape from positive electrode-side end face 104 of spacer 100 toward the inside of flat cell 1.

Although guide portion 105 is not provided in cut 103 in the present embodiment, it is feasible to provide guide portion 105 in cut 103. Further, it is feasible to provide connector terminals 31 on both short sides of flat cell 1 although connector terminal 31 is provided on one short side of flat cell 1 in the present embodiment.

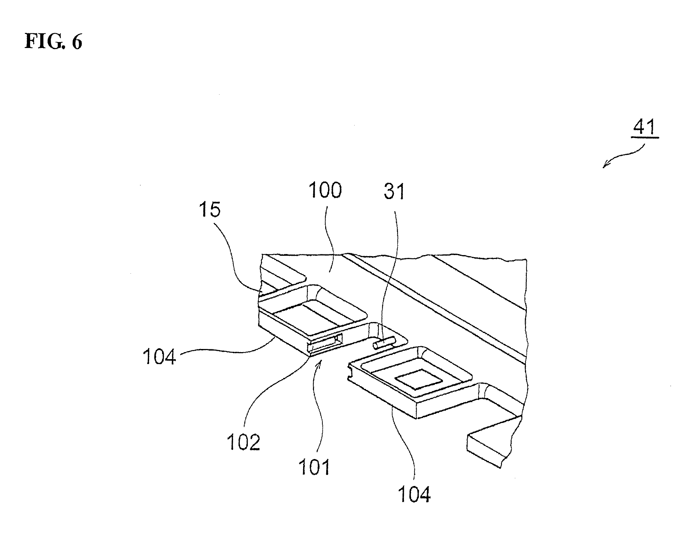

Next, integral cell unit 41 will be explained below with reference to FIG. 6. FIG. 6 is an enlarged view of part of integral cell unit 41 corresponding to that shown in area B of FIG. 4. The basic configuration of integral cell unit 41 is similar to that of integral cell unit 40 shown in FIGS. 4 and 5. However, integral cell unit 41 is different from integral cell unit 40 in that integral cell unit 41 has engaging portion 102 in place of guide portion 105. The formation of guide portion 105 enables easy positioning of external connector 80 relative to fitting portion 70 for prevention of damage to connector terminal 31.

As shown in FIG. 6, engaging portion 102 is formed in side faces of cut 101, i.e., respective both lateral faces of spacer 100 perpendicular to end face 104. Engaging portion 102 is shaped to engage therein clip portion 83 of external connector 80 as will be explained later. By engaging portion 102, there are steps defined along the lateral faces perpendicular to end face 102. The engagement structure of engaging portion 102 and clip portion 83 will be explained later.

Cut 103 is symmetrical in position with cut 101 in which engaging portion 102 is provided. Engaging portion 102 is provided in cut 103 as in the case of engaging portion 102 in cut 101. Alternatively, engaging portion 102 may be provided in either cut 101 or cut 103.

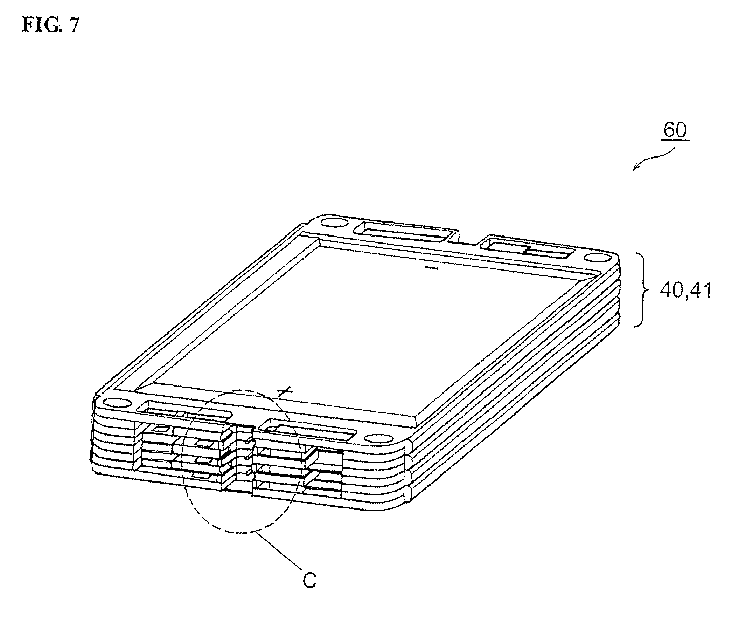

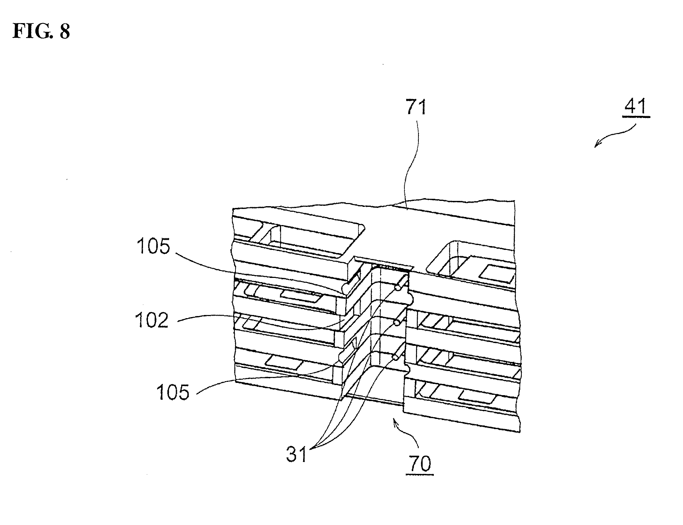

Laminated cell assembly 60 according to the present embodiment will be next explained below with reference to FIGS. 7 and 8. FIG. 7 is a perspective view of laminated cell assembly 60. FIG. 8 is an enlarged view of part of laminated cell assembly 60 shown in area C of FIG. 7.

Laminated cell assembly 60 has a plurality of integral cell units 40 and 41 laminated to one another. In the present embodiment, three integral cell units 40, one integral cell unit 41 and four integral cell units 40 are laminated together in order from the upper side of laminated cell assembly 60. Integral cell units 40 are laminated in such a manner that the positive electrode side of one of integral cell units 40 is arranged between the negative electrode sides of the other integral cell units 40. Similarly, integral cell unit 41 is laminated in such a manner that the positive electrode side of integral cell unit 41 is arranged between the negative electrode sides of integral cell units 40. Positive and negative electrode tabs 14 and 15 of adjacent integral cell units 40 and 41 are connected together by a conductive bus bar (not shown) or connected directly together by lamination. By this, the plurality of integral cell units 40 and 41 are connected in series. The number of integral cell units 40 and 41 can be set arbitrarily. Further, integral cell unit 41 is not necessarily used as a center cell layer in laminated cell assembly 60. The plurality of integral cell units 40 and 41 may alternatively be connected in parallel.

As shown in FIG. 8, fitting portion 70 is formed in an end face of laminated cell assembly 60 upon lamination of integral cell units 40 and 41. More specifically, fitting portion 70 is defined by alternating cuts 101 and 103 of laminated spacers 100. As engaging portion 102 or guide portion 105 is provided in cut 101, multilayer fitting portion 70 has engaging portion 102 and guide portion 105 in odd- or even-numbered layers of laminated cell assembly 60.

In fitting portion 70, connector terminals 31 protrude from facing surface 71 of laminated cell assembly 60 facing after-mentioned external connector 80. Engaging portion 102 and guide portion 105 are formed in sliding surfaces of laminated cell assembly 60 for sliding contact with external connector 80, i.e., surfaces perpendicular to facing surface 71 or lateral wall surfaces of fitting portion 70.

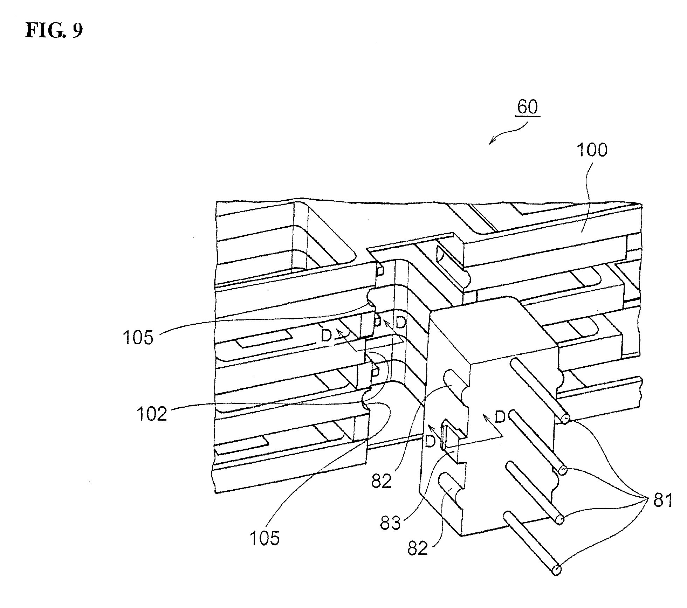

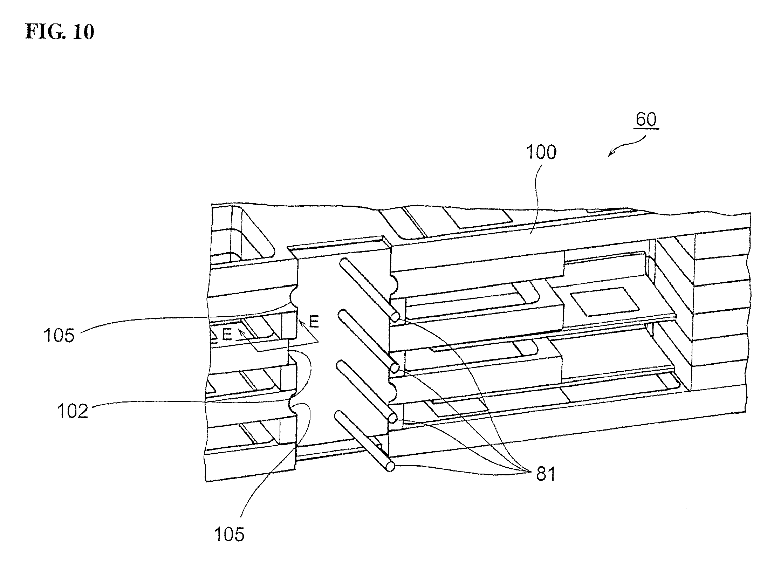

Fitting portion 70 and external connector 80 fitted in fitting portion 70 will be explained below with reference to FIGS. 9 and 10. FIG. 9 is a perspective view showing part of laminated cell assembly 60 and external connector 80. FIG. 10 is a perspective view showing part of laminated cell assembly 60 in a state where external connector 80 is fitted in fitting portion 70.

External connector 80 has harnesses 81 inserted and fixed in a back surface thereof. Harnesses 81 are connected to terminals (not shown) inside external connector 80. External connector 80 also has guide portion 82 and clip portion 83 on lateral surfaces thereof. Guide portion 82 is shaped according to the shape of guide portion 105 so that guide portions 82 and 105 performs a positioning function at the time of fitting external connector 80 in fitting portion 70. Clip portion 83 is shaped according to the shape of engaging portion 102 so as to hook into engaging portion 102.

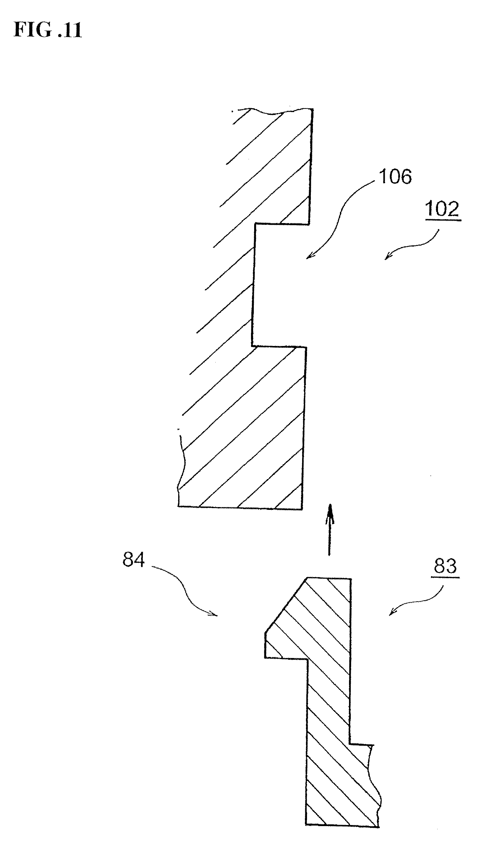

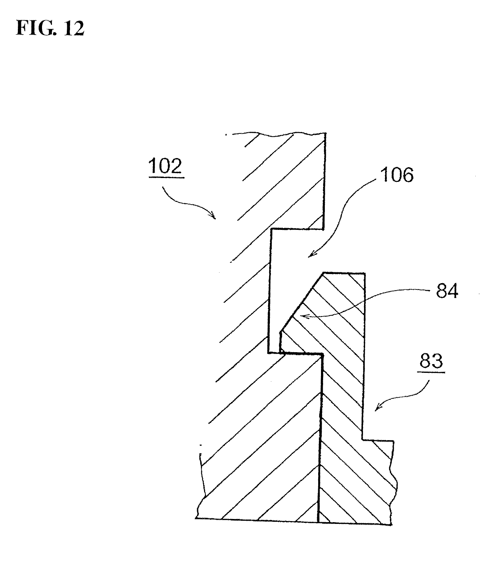

Next, engaging portion 102 and clip portion 83 will be explained below with reference to FIGS. 11 and 12. FIG. 11 is a cross-sectional view of part taken along line D-D of FIG. 9. FIG. 12 is a cross-sectional view of part taken along line E-E of FIG. 10.

As shown in FIG. 11, clip portion 83 and engaging portion 102 have hook 84 and groove 106, respectively. When clip portion 83 is inserted in the direction of arrow of FIG. 11 (i.e. in the insertion direction of external connector 80), hook 84 slides on lateral wall surface of engaging portion 102 and fits in groove 84 as shown in FIG. 12. As hook 84 has a surface perpendicular to the direction of arrow of FIG. 11, the movement of clip 83 is restricted by contact of the perpendicular surface of hook 84 with the lateral wall of groove 106 during the engagement of clip portion 83 and engaging portion 102.

Referring back to FIG. 10, fitting portion 70 is shaped according to the shape of external connector 80 such that external connector 80 is inserted and fitted into fitting portion 70. Upon insertion of external connector 80 into fitting portion 70, engaging portion 102 and clip portion 83 are engaged with each other in such a manner as to prevent external connector 80 from moving into the insertion direction or a direction opposite to the insertion direction.

As fixing part 70 has the same function as a hole for insertion of external connector 80, i.e., a case for a female connector, there is no need to form a female connector insertion hole in laminated spacers 100 and no need to provide a female connector as a separate component part.

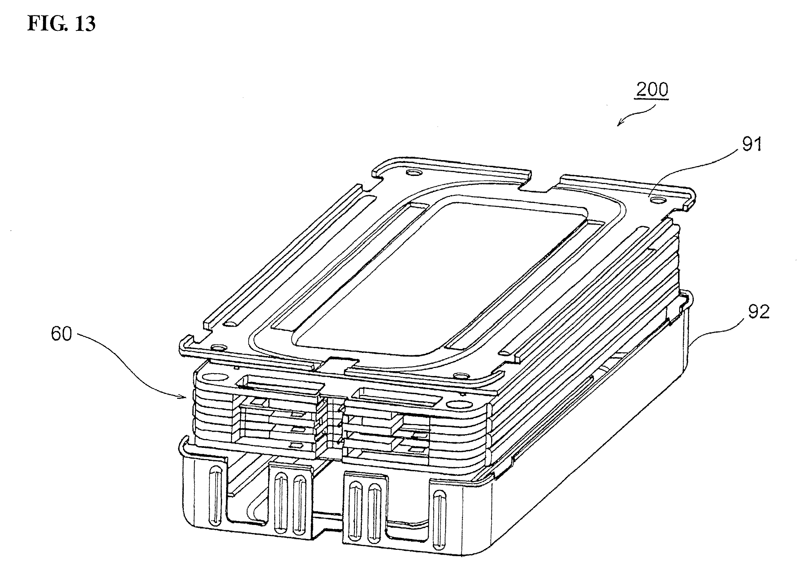

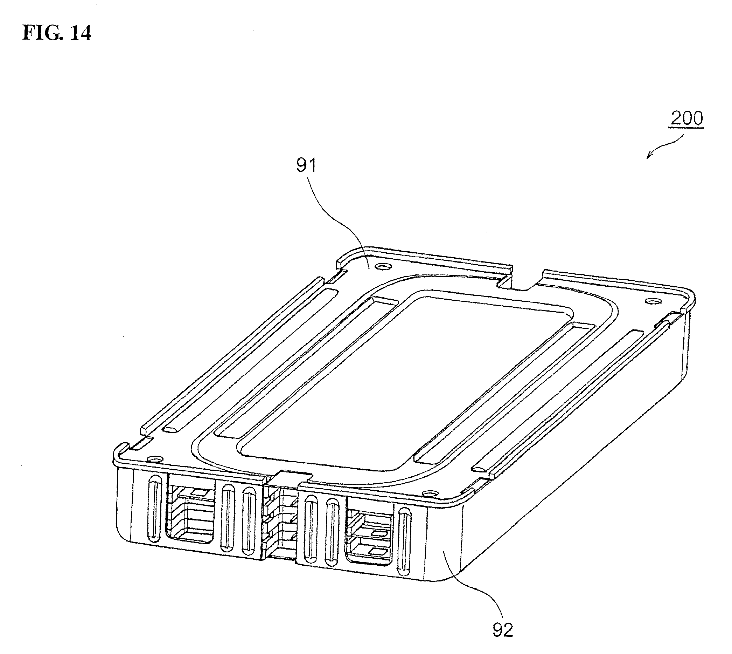

Cell module 200 will be next explained below with reference to FIGS. 13 and 14. FIG. 13 is a perspective view of cell module 200 before being sealed in a casing. FIG. 14 is a perspective view of cell module 200. Cell module 200 has upper and lower cases 91 and 92 surrounding laminated cell assembly 60. Laminated cell assembly 60 is sealed in upper and lower cases 91 and 92 by swaging peripheral portions of upper and lower cases 91 and 92. Cuts are formed in upper and lower cases 91 and 92 at positions corresponding to fixing part 70 of laminated cell assembly 60 so as to constitute a hole for insertion of external connector 80. As described above, cell module 200 has fitting portion 70 formed by lamination of spacers 100 so as to be fitted with external connector 80 and engaging portion 102 formed in spacers 100 so as to be engaged with clip portion 83 in the present embodiment. External connector 80 can be connected assuredly to cell module 200 by means of fitting portion 70 and engaging portion 102. There is no need to provide a female connector as a separate component part or to provide a separate component part with a hole for insertion of external connector 80. It is therefore possible to prevent an increase in the number of component parts of cell module 200. It is also possible to provide cell module 200 with high productivity as the hole for insertion of external connector 80 can be formed with the same lamination time and effort as in conventional flat cells by lamination of integral cell units 40 and 41.

There is no need to form a spacer with a hole for insertion of an internal connector in the present embodiment. This allows improvement in manufacturing efficiency so that cell module 200 can be provided with high productivity. Further, engaging portion 102 is provided in spacers 100 so as to improve the connection reliability of cell module 200 and external connector 80 and give a tactile feel at the time of insertion of external connector 80 for improvement in operation efficiency. In the present embodiment, it is possible by engaging portion 102 to easily detect whether or not cell module 200 is engaged assuredly with external connector 80. In addition, it is possible to reduce the size of cell module 200 for effective use of cell space as there is no need to provide an internal connector as a separate component part or to provide a separate component part with an internal connector insertion hole in the present embodiment.

In the present embodiment, flat cell 1 and spacer 100 are integrated into one unit. This makes it possible that, even when stress is applied to connector terminals 31 at the time of insertion of external connector 80 into fitting portion 70, spacers 100 integral with flat cells 1 can absorb such stress and reduce load on connection terminals 31. Further, spacers 100 can be laminated integrally and simultaneously with flat cells 1 for improvement in laminating operation efficiency. The integral formation of flat cell 1 and spacer 100 also allows improvement in stiffness so as to provide electrode tabs 14, 15 and connector terminals 31 with a strong structure against external stress such that cell module 200 can achieve more safety and higher reliability.

As spacers 100 are flame-shaped and arranged around flat cells 1, flat cells 1 can be surrounded and covered by the insulating members, respectively, so as to prevent metal parts from being exposed and causing a short circuit therebetween.

In the present embodiment, flat cell 1 and spacer 100 are integrated into one unit by insertion molding so as to surround and cover flat cell 100 by the insulating member. This makes it possible that, even when stress is applied to connector terminals 31 at the time of insertion of external connector 80 into fitting portion 70, frame-shaped spacers 100 can absorb such stress and reduce load on connection terminals 31.

In particular, the spacers 100 are adapted to hold electrode tabs 14, 15 and connector terminals 31 and formed integral with electrode tabs 14, 15 and connector terminals 31, respectively, in the present embodiment. This makes it possible to, even when stress is applied to electrode tabs 14, 15 and connector terminals 31 at the time of insertion of external connector 80 into fitting portion 70, reduce load on electrode tabs 14, 15 and connection terminals 31.

In the present embodiment, connector terminals 31 are formed on electrode plates 30 so that electrode plates 30 are connected to electrode tabs 14, 15 and held together with electrode tabs 14, 15 by spacers 100, respectively. By such a simple configuration, cell module 200 can establish connection between electrode tabs 14, 15 and connector terminals but also increase the stiffness of its terminal part.

Further, the plane directions of electrode tabs 14, 15, the plane directions of terminal plates 30 and the longitudinal directions of connector terminals 31 are in parallel with the direction of insertion of external connector 80 in the present embodiment. This makes it possible to, at the time of insertion of external connector 80, maintain the stiffness against stress applied to electrode tab 14, 15, terminal plate 30 and connector terminal 31 such that cell module 200 can achieve more safety and higher reliability.

In the present embodiment, terminal plate 30 and electrode tab 14, 15 are joined together by ultrasonic joining. This makes it possible to prevent an increase in resistance for downsizing of cell module 200.

Furthermore, spacers 100 are formed of a hot-melt material, a resin material or a mixture thereof in the present embodiment. This leads to improvement in the shape flexibility of spacers 100. The mixture of the hot-melt material and resin material can be used properly for parts where strength is required.

Although each of spacers 100 is frame-shaped so as to surround flat cell 1 in the present embodiment, spacer 100 may alternatively be formed so as to hold therebetween the short sides of flat cell 1.

In the present embodiment, connector terminal 31 and electrode tab 14, 15 may be formed into the same component part so as to provide connector terminal 31 as part of electrode tab 14, 15. This eliminates the need to provide terminal plate 30 and makes it possible to further reduce the number of component parts of cell module 200.

Although external connector 80 is provided as a male connector; and engaging portion 70, connector terminal 31 and engaging portion 102 are provided as a female connector in the present embodiment, it is alternatively feasible to provide external connector 80 as a female connector and to provide engaging portion 70, connector terminal 31 and engaging portion 102 as a male connector.

In the present embodiment, guide portion 105 is not necessarily provided because engaging portion 102 performs the function of positioning of external connector 80.

Herein, spacers 100 corresponds to insulating members of the present invention; engaging portion 102 corresponds to a second engaging portion of the present invention; and clip portion 83 corresponds to a first engaging portion of the present invention.

## Claims

1. A cell module, comprising:
a plurality of flat cells and insulating members laminated together, the flat cells having electrode tabs, the insulating members being arranged so as to prevent a short circuit between the electrode tabs;
a fitting portion formed by lamination of the insulating members so as to be fitted with an external connector; and
a second engaging portion formed in the insulating members so as to be engaged with a first engaging portion of the external connector.

2. The cell module according to claim 1, wherein the insulating members are integral with the flat cells, respectively.

3. The cell module according to claim 1 or 2, wherein the insulating members are frame-shaped and arranged around the flat cells, respectively.

4. The cell module according to any one of claims 1 to 3, further comprising connector terminals electrically connected to the respective flat cells,
wherein the insulating members are adapted to hold the electrode tabs and the connector terminals and are integral with the electrode tabs and the connector terminals, respectively.

5. The cell module according to any one of claims 1 to 4, further comprising terminal plates held by the insulating members and connected to the electrode tabs, respectively,
wherein the connector terminals are formed on the respective terminal plates.

6. The cell module according to claim 5, wherein the electrode tabs are plate-shaped; and wherein plane directions of the electrode tabs, plane directions of the terminal plates and longitudinal directions of the connector terminals are in parallel with a direction of insertion of the first connector into the second connector.

7. The cell module according to any one of claims 1 to 6, wherein the insulating members have a guide portion for positioning of the external connector relative to the fitting portion.
